(19) Europäisches Patentamt
European Patent Office
Office européen des brevets

(11) **EP 4 629 558 A1**

(12) **DEMANDE DE BREVET EUROPEEN**

(43) Date de publication:
**08.10.2025 Bulletin 2025/41**

(21) Numéro de dépôt: **25167418.0**

(22) Date de dépôt: **31.03.2025**

(51) Classification Internationale des Brevets (IPC):
**H04L 9/08** (2006.01)  **H04L 9/30** (2006.01)
**H04L 9/00** (2022.01)

(52) Classification Coopérative des Brevets (CPC):
**H04L 9/0836; H04L 9/0866; H04L 9/0897;
H04L 9/3073; H04L 9/50;** H04L 2209/84

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **03.04.2024 FR 2403444**

(71) Demandeur: **Commissariat à l'Energie Atomique
et aux Energies
Alternatives
75015 Paris (FR)**

(72) Inventeurs:
• **HENNEBERT, Christine
38054 GRENOBLE CEDEX 09 (FR)**
• **JAYET, Quentin
38054 GRENOBLE CEDEX 09 (FR)**

(74) Mandataire: **Brevalex
Tour Trinity
1 B Place de la Défense
92400 Courbevoie (FR)**

(54) **PROCÉDÉ ET DISPOSITIF DE COMMUNICATION SÉCURISÉ UTILISANT UN IDENTIFIANT DÉRIVÉ DE MANIÈRE DÉTERMINISTE**

(57) L'invention concerne un procédé de communication sécurisé entre un pair émetteur (3) et un pair récepteur (4) et impliquant un acteur externe (2) disposant d'un portefeuille hiérarchique déterministe (1) comportant un couple de clés maîtres $k_{master}$ et $K_{master}$. L'acteur externe (2) configure (104) le pair récepteur (4) en enregistrant dans sa mémoire électronique une clé IBE de déchiffrement $aDKey[Id_j, k_{master}]$. L'acteur externe (2) configure (105) le pair émetteur (3) en enregistrant dans sa mémoire électronique un indice j du pair récepteur et la clé publique maitre $K_{master}$. Le pair émetteur (3) détermine (106) de manière déterministe un identifiant $Id_j$ du pair récepteur, puis calcule (107) une clé IBE de chiffrement $aCKey[Id_j, K_{master}]$. Le pair émetteur (3) chiffre (108) un message (60) en utilisant la clé $aCKey[Id_j, K_{master}]$ et envoi (109) le message chiffré (61) au pair récepteur (4). Le pair récepteur (4) déchiffre (110) le message en utilisant la clé $aDKey[Id_j, k_{master}]$.

[Fig. 1]

**EP 4 629 558 A1**

**Description**

**DOMAINE TECHNIQUE DE L'INVENTION**

L'invention a pour objet un procédé de communication sécurisé. Plus précisément l'invention concerne un procédé de communication sécurisé utilisant un identifiant dérivé de manière déterministe. Cette communication sécurisée s'effectue entre des dispositifs, appelés pairs dans le présent texte.

L'objet de l'invention vise à réduire le volume de mémoire permanente d'un pair nécessaire à la sécurisation des communications du pair.

**ÉTAT DE LA TECHNIQUE**

De nombreuses techniques permettent la sécurisation des communications entre des dispositifs connectés par un réseau de communication. Les plus répandus impliquent généralement l'utilisation d'infrastructure de clés publiques (PKI). Cependant de telles techniques nécessitent pour chaque dispositif de distribuer et stocker de nombreuses clés publiques. La cryptographie basée sur l'identité, « Identity Based Encryption » (IBE) permet de grandement simplifier la gestion des clés en utilisant l'identifiant d'un dispositif comme clé publique ce qui permet notamment à chaque dispositif de ne conserver en mémoire que des identifiants. La cryptographie basée sur l'identité présente cependant de nombreux inconvénients notamment la nécessité d'une autorité de confiance centralisée qui génère des clés privées des dispositifs utilisateurs à partir de leur identifiant lorsque ces dispositifs nécessite de chiffrer un message avant sa transmission. Cette autorité de confiance centralisée est un point de compromission majeur de la sécurité de l'ensemble des dispositifs car cette dernière est en mesure de déchiffrer les communications de chacun des dispositifs utilisateurs et d'usurper leur identité vis-à-vis des autres dispositifs utilisateurs.

Une autre technologie, à priori incompatible avec la cryptographie basée sur l'identité, a été décrite dans le contexte des cryptomonnaies et normalisée par le « Bitcoin Improvement Proposal BIP32 » aussi appelé standard BIP32, puis par le BIP39 et le BIP44. Il s'agit des portefeuilles déterministes hiérarchiques « Hierarchical Deterministic Wallet » (HDW). Ce sont une forme avancée de portefeuille pour les cryptomonnaies qui permet de créer une structure organisée de comptes et sous-comptes à partir d'une seule graine initiale.

Cette graine est une source d'entropie à partir de laquelle les clés seront générées et peut être utilisée pour restaurer le portefeuille sur un autre appareil. En utilisant cette graine, une fonction de dérivation crée une structure parent-enfant de clés et adresses de manière hiérarchique. C'est-à-dire que chaque clé est capable de produire des sous-clés, qui à leur tour peuvent engendrer d'autres sous-clés, et ainsi de suite. La première clé générée à partir de la graine est appelée la clé maître. Elle est au sommet de la hiérarchie et sera utilisée pour générer des clés enfants. Les clés sont générées selon des chemins de dérivation spécifiques qui dictent comment naviguer dans l'arborescence des clés. Cela permet d'organiser les comptes pour différents usages ou cryptomonnaies sans mélanger les fonds.

Pour chaque adresse dans un portefeuille HDW, il y a une clé publique correspondante qui peut être partagée et utilisée pour recevoir des fonds, et une clé privée qui doit rester secrète et est utilisée pour autoriser les transactions sortantes.

Les utilisateurs peuvent générer de nombreuses adresses à partir de leur portefeuille HDW sans avoir à sauvegarder chaque clé privée individuelle. Une seule graine peut restaurer l'intégralité du portefeuille avec toutes ses clés et transactions associées.

Les portefeuilles déterministes hiérarchiques sont dédiées à la sécurisation des transactions de cryptomonnaie, notamment du Bitcoin. Ils sont utilisés dans des réseaux de communication décentralisés.

**Références**

« Identity based encryption from the Weil pairing » by D. Boneh and M. Franklin, SIAM J. of Computing, Vol. 32, No. 3, pp. 586-615, 2003.

**EXPOSÉ DE L'INVENTION**

La présente invention vise à remédier à tout ou partie des inconvénients de l'état de la technique cités ci-dessus.

À cet effet, selon un premier aspect, l'invention concerne un procédé de communication sécurisé entre un pair émetteur et un pair récepteur. Le procédé de communication implique un acteur externe disposant d'un portefeuille hiérarchique déterministe. Le portefeuille hiérarchique déterministe comporte une paire de clés maîtres asymétriques, constituée par une clé privée maître $k_{master}$ et une clé publique maître $K_{master}$. Le pair émetteur et le pair récepteur comportent une mémoire électronique et une unité de traitement. Le procédé de communication comporte les étapes suivantes :

- l'acteur externe attribue un indice j au pair récepteur dans le portefeuille hiérarchique déterministe,
- l'acteur externe détermine un identifiant $Id_j$ du pair récepteur de manière déterministe à partir de l'indice j du pair récepteur et de la clé publique maitre $K_{master}$,
- l'acteur externe génère une clé IBE de déchiffrement $aDKey[Id_j,k_{master}]$ à partir de l'identifiant du pair récepteur $Id_j$ et de la clé privée maître $k_{master}$,
- l'acteur externe configure le pair récepteur en enregistrant dans la mémoire électronique du pair récepteur la clé IBE de déchiffrement $aDKey[Id_j,k_{master}]$,
- l'acteur externe configure le pair émetteur en enregistrant dans la mémoire électronique du pair émetteur l'indice j du pair récepteur et la clé publique maitre $K_{master}$,
- le pair émetteur détermine de manière déterministe l'identifiant $Id_j$ du pair récepteur à partir de l'indice j du pair récepteur et de la clé publique maitre $K_{master}$,
- le pair émetteur calcule une clé IBE de chiffrement $aCKey[Id_j,K_{master}]$ à partir de l'identifiant du pair récepteur $Id_j$ et de la clé publique maitre $K_{master}$,
- le pair émetteur chiffre un message en utilisant la clé IBE de chiffrement $aCKey[Id_j, K_{master}]$,
- le pair émetteur envoi le message chiffré au pair récepteur,
- le pair récepteur déchiffre le message chiffré en utilisant la clé IBE de déchiffrement $aDKey[Id_j, k_{master}]$.

On entend par pair, un dispositif configuré pour communiquer avec d'autres dispositifs similaires.

On entend par portefeuille hiérarchique déterministe un système permettant de générer des clés cryptographiques à partir d'une graine initiale de manière déterministe. La graine initiale permet de générer des clés parents qui sont ensuite utilisées pour dériver des clés enfants. Les clés cryptographiques issues d'un portefeuille hiérarchique déterministe générées ne nécessite pas d'être enregistrées, elles peuvent être regénérées à l'identique pour chaque utilisation.

On entend par acteur externe, un fabricant de dispositif pair ou une entité chargée de la configuration des dispositifs pairs qui vont constituer les membres d'un réseau de communication décentralisé.

De telle dispositions permettent, lorsque les étapes effectuées par l'acteur externe sont effectuées hors ligne (les pairs ne sont pas connectés à un réseau de communication), une communication sécurisée entre le pair récepteur et le pair émetteur ne nécessitant de conserver dans la mémoire électronique des pairs que peu d'éléments cryptographiques. En effet, l'identifiant et la clé de chiffrement sont calculés par le pair émetteur pour l'envoi d'un message et ne nécessite donc pas d'être conservés dans la mémoire électronique du pair émetteur.

Dans des modes particuliers de mise en oeuvre l'invention peut comporter en outre l'une ou plusieurs des caractéristiques suivantes, prises isolément ou selon toutes les combinaisons techniquement possibles.

Selon un mode de réalisation, les étapes de détermination de manière déterministe de l'identifiant $Id_j$ sont réalisées en utilisant une fonction de dérivation utilisant une fonction de hachage HMAC-SHA512.

Selon un mode de réalisation, le procédé de communication comporte les étapes supplémentaires suivantes :

- le pair émetteur calcul une clé publique $K_{ih}$ à partir d'une clé privée $k_{ih}$,
- le pair émetteur divulgue au pair récepteur la clé publique $K_{ih}$,
- le pair émetteur génère une signature du message en utilisant le message chiffré et la clé privée $k_{ih}$,
- le pair émetteur envoi la signature du message au pair récepteur,
- le pair récepteur vérifie la signature du message en utilisant la clé publique $K_{ih}$ et le message chiffré.

De telle dispositions permettent au pair récepteur de vérifier l'authenticité du message reçu.

Selon un mode de réalisation, le pair émetteur comporte un composant matériel de sécurité et la clé privée $k_{ih}$ est générée au sein du composant matériel de sécurité.

Le composant matériel de sécurité permet de sécurisé de manière supplémentaire la clé privée du pair émetteur et d'ainsi limiter de manière supplémentaire notamment le risque que l'identité du pair émetteur soit usurpée.

Selon un mode de réalisation, le pair émetteur et le pair récepteur sont des pairs d'un réseau de pairs partageant un registre distribué et le procédé de communication comporte les étapes supplémentaires suivantes :

- le pair émetteur génère un haché du message chiffré,
- le pair émetteur s'authentifie auprès du registre distribué en utilisant une clé privée $k_{ih}$,
- le pair émetteur publie dans le registre distribué une transaction comportant, l'identifiant du pair récepteur et le haché du message chiffré,
- le pair récepteur vérifie que le haché du message chiffré publié dans le registre distribué correspond au message chiffré reçu.

On entend par un réseau de pairs, plusieurs dispositifs connectés à distance par, par exemple, un réseau internet ou GSM ou une combinaison de plusieurs technologies de connexion à distance. Chaque dispositif, appelé pair, du réseau de pair pourra comporter au moins une unité de traitement, une mémoire et un module de communication.

On entend par registre distribué, un registre ou log ou ledger, décentralisé, partagé entre les pairs du réseau de pairs, éventuellement répliqué par chaque pair du réseau de pairs et dans lequel des opérations ou des publications sont enregistrées dans un certain ordre et ne peuvent plus être modifiées une fois enregistrées. Un registre décentralisé peut être réalisé à l'aide d'une technologie comme par exemple une chaine de blocs ou une base de données décentralisée ou un « Directed Acyclic Graph ».

L'utilisation d'un registre distribué permet au pair récepteur de vérifier l'authenticité du message sans nécessiter de conserver en mémoire la clé publique du pair émetteur.

Selon un mode de réalisation, le registre distribué est un registre distribué de chaine de bloc et la chaine de bloc comprend un contrat intelligent émettant une notification vers le pair récepteur, la notification comprenant le haché du message chiffré.

L'utilisation d'un contrat intelligent d'une chaine de bloc pour transmettre le haché du message chiffré permet de déclencher la transmission du haché par la publication de la transaction dans le registre. Le pair récepteur ne nécessitera pas de récupérer le haché dans le registre pour vérifier l'authenticité du message.

Selon un mode de réalisation, l'acteur externe génère la clé privée $k_{ih}$ et configure le pair émetteur en enregistrant dans la mémoire électronique du pair émetteur la clé privée $k_{ih}$.

Selon un mode de réalisation, la clé privée $k_{ih}$ est une clé privée enfant étendue renforcée générée à partir de la clé privée maitre $k_{master}$ en utilisant un indice ih égale à la somme d'un indice entier i et de $2^{31}$.

Lorsque la clé privée $k_{ih}$ est généré selon le schéma de génération déterministe normalisé par le « Bitcoin Improvement Proposal BIP32 » l'utilisation d'un indice supérieur à $2^{31}$ permet d'empêcher un tier de déduire la clé privée maitre $k_{master}$ à partir de la clé publique maitre $K_{master}$ et de la clé privé $k_{ih}$.

Selon un deuxième aspect, l'invention concerne un dispositif pair comportant une mémoire électronique et une unité de traitement. L'unité de traitement est configurée pour, en exécutant des instructions contenues dans la mémoire électronique, réaliser les étapes suivantes :

- déterminer de manière déterministe un identifiant $Id_j$ d'un pair récepteur à partir d'un indice j du pair récepteur et d'une clé publique maitre $K_{master}$,
- calculer une clé IBE de chiffrement aCKey[$Id_j$,$K_{master}$] à partir de l'identifiant du pair récepteur $Id_j$ et de la clé publique maitre $K_{master}$,
- chiffrer un premier message en utilisant la clé IBE de chiffrement aCKey[$Id_j$, $K_{master}$],
- envoyer le premier message chiffré au pair récepteur,
- déchiffrer un deuxième message chiffré en utilisant une clé IBE de déchiffrement aDKey[Idi, $k_{master}$].

De telle dispositions permettent au dispositif pair de mettre en oeuvre le procédé de communication sécurisée selon l'invention en tant que pair récepteur et en tant que pair émetteur.

Selon un mode de réalisation, le dispositif comporte également un composant matériel de sécurité, et le composant matériel de sécurité est configuré pour réaliser les étapes suivantes :

- déterminer de manière déterministe un identifiant $Id_j$ d'un pair récepteur à partir d'un indice j du pair récepteur et d'une clé publique maitre $K_{master}$,
- calculer une clé IBE de chiffrement aCKey[$Id_j$,$K_{master}$] à partir de l'identifiant du pair récepteur $Id_j$ et de la clé publique maitre $K_{master}$,
- déchiffrer un message chiffré en utilisant une clé IBE de déchiffrement aDKey[Idi, $k_{master}$].

Le composant matériel de sécurisé permet d'augmenter encore la sécurité des communications du dispositif pair en diminuant le risque qu'un tier obtienne un des éléments cryptographiques sensibles que sont la clé de déchiffrement, la clé publique maitre $K_{master}$ et l'identifiant du pair récepteur.

**PRESENTATION DES FIGURES**

L'invention sera mieux comprise à la lecture de la description suivante, donnée à titre d'exemple nullement limitatif, et faite en se référant aux figures:

[Fig. 1] une représentation schématique d'un exemple du procédé selon le premier aspect de l'invention,
[Fig. 2] une représentation schématique d'exemples de détermination d'identifiant,
[Fig .3] une représentation schématique d'un exemple d'un mode de réalisation du procédé selon le premier aspect de l'invention,
[Fig .4] une représentation schématique d'un exemple d'un autre mode de réalisation du procédé selon le premier aspect de l'invention,
[Fig .5] une représentation schématique d'un exemple du dispositif pair selon le deuxième aspect de l'invention.

Dans ces figures, des références identiques d'une figure à une autre désignent des éléments identiques ou analogues. Pour des raisons de clarté, les éléments représentés ne sont pas nécessairement à une même échelle, sauf mention contraire.

## DESCRIPTION DÉTAILLÉE DE L'INVENTION

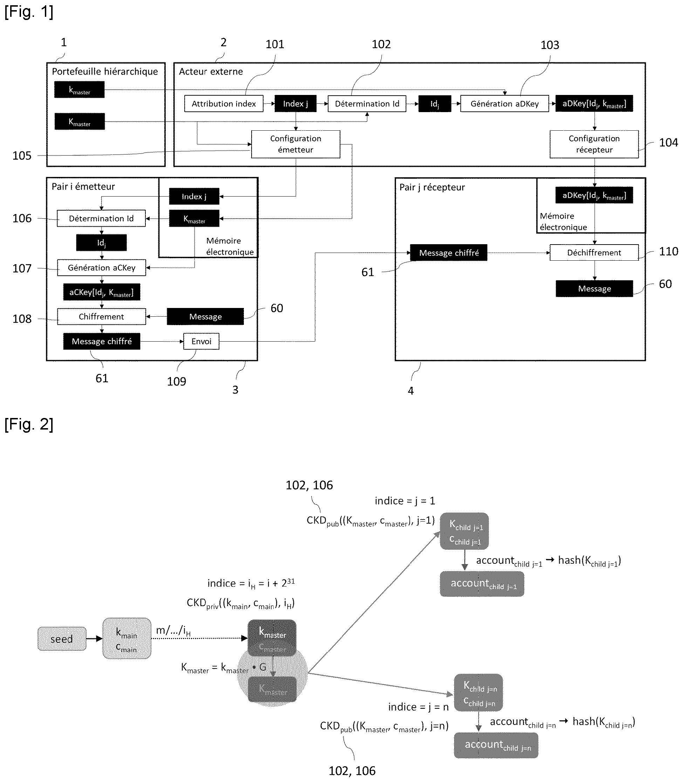

La [Fig. 1] est une représentation schématique d'un exemple du procédé selon le premier aspect de l'invention. Un acteur externe 2 est représenté. Cet acteur externe 2 pourra être un fabricant, un fournisseur ou un utilisateur de dispositif pair qui configure au préalable de leur mise en service les dispositifs pairs selon l'invention. L'acteur externe 2 dispose d'un portefeuille hiérarchique déterministe 1. Le portefeuille hiérarchique déterministe 1 comporte une clé privée maître $k_{master}$ et une clé publique maître $K_{master}$ dérivées d'une graine initiale. La clé publique maître $K_{master}$ pourra par exemple être calculée à partir de la clé privée maître $k_{master}$ selon l'opération sur la courbe elliptique :

[Math. 1]

$$K_{master} = k_{master}\, \mathrm{G}\,(\mathrm{mod}\ n)$$

L'acteur externe 2 effectue plusieurs étapes visant à la configuration préalable d'un pair émetteur 3 et d'un pair récepteur 4. L'acteur externe 2 attribue 101 un indice, noté index j dans le présent texte et sur les figures, au pair récepteur 4. A partir de l'index j et de la clé publique maître $K_{master}$ il détermine 102 un identifiant du pair récepteur noté $Id_j$. Cette détermination est déterministe, c'est-à-dire que à partir d'un même indice et d'une même clé publique maître $K_{master}$ l'identifiant déterminé sera toujours le même. Ensuite, l'acteur externe 2 génère 103 une clé de déchiffrement $aDKey[Id_j, k_{master}]$ pour le pair récepteur 4 en utilisant l'identifiant du pair récepteur et la clé privée maître $k_{master}$. La génération de clé de déchiffrement $aDKey[Id_j, k_{master}]$ pourra être réalisée selon un schéma de génération IBE de l'art antérieur. L'acteur externe 2 configure 104 le pair récepteur 4 en enregistrant dans une mémoire électronique du pair récepteur la clé de déchiffrement $aDKey[Id_j, k_{master}]$. L'acteur externe 2 configure 105 également le pair émetteur 3 en enregistrant dans une mémoire électronique du pair émetteur l'indice Index j du pair récepteur 4 et la clé publique maître $K_{master}$.

Le pair émetteur 3 pourra ensuite communiquer de manière sécurisée vers le pair récepteur 4 à travers un réseau de communication. Cette communication s'effectue de la manière suivante : La pair émetteur détermine 106 l'identifiant $Id_j$ du pair récepteur 4 à partir de l'indice j et de la clé publique maître. Il calcul 107 une clé de chiffrement $aCKey[Id_j, K_{master}]$ à partir de l'identifiant du pair récepteur 4 et de la clé publique maître $K_{master}$. Cette clé de chiffrement $aCKey[Id_j, K_{master}]$ est calculée selon un schéma IBE de l'art antérieur permettant de faire correspondre la clé de chiffrement $aCKey[Id_j, K_{master}]$ à la clé de déchiffrement $aDKey[Id_j, k_{master}]$. Le pair émetteur chiffre 108 un message 60 en utilisant la clé $aCKey[Id_j, K_{master}]$ et envoi 109 le message chiffré 61 au pair récepteur 4. Le pair récepteur 4 déchiffrera 110 ensuite le message chiffré 61 reçu.

La mise en oeuvre de ce procédé permet au pair émetteur de sécuriser ses messages vers le pair récepteur en ne nécessitant de conserver de façon permanente dans sa mémoire électronique que l'indice du pair récepteur et la clé publique maître. Un faible volume de mémoire électronique permanente est donc nécessaire pour sécuriser les échanges entre les pairs utilisateur du procédé selon l'invention.

Le procédé selon l'invention pourra par exemple servir à sécuriser les communications entre les drones d'une flotte de drone. Dans cet exemple, un drone aura le rôle d'un pair du procédé. Les drones étant typiquement des dispositifs dont la mémoire électronique embarquée est de faible volume, le procédé selon l'invention est donc particulièrement avantageux pour sécuriser leurs communications.

Selon un mode de réalisation, les détermination 102, 106 de l'identifiant Idj du pair récepteur sont réalisées en utilisant une fonction de dérivation utilisant une fonction de hachage HMAC-SHA512. HMAC signifie "Hash-based Message Authentication Code" ou "Code d'authentification de message basé sur un hachage". SHA512 représente l'algorithme de hachage spécifique utilisé dans ce processus, qui fait partie de la famille SHA-2 (Secure Hash Algorithm 2) et produit un digest de 512 bits.

La [Fig. 2] est une représentation schématique d'exemple de génération de l'identifiant $Id_j$ du pair récepteur 4. Dans ces exemples, une chaine de code $c_{master}$ est utilisé en plus de la clé publique master $K_{master}$ et de l'indice j pour déterminer 102, 106 une clé publique enfant $K_{child\ j}$ et une chaine de code $c_{child\ j}$. La chaine de code $c_{master}$ permet d'augmenter l'entropie des éléments cryptographiques générer. La clé publique enfant $K_{child\ j}$ pourrait être générée uniquement à partir de la clé publique maître $K_{master}$ et de l'indice j. La clé publique enfant $K_{child j}$ peut également permettre de générer un nom de compte $account_{child\ j}$.

Selon un mode de réalisation, l'identifiant du pair récepteur $Id_j$ est la clé publique enfant $K_{child\ j}$.

Selon un mode de réalisation, l'identifiant $Id_j$ est la chaine de code $c_{child\,j}$.

Selon un mode de réalisation, l'identifiant $Id_j$ est le nom de compte $account_{child\,j}$.

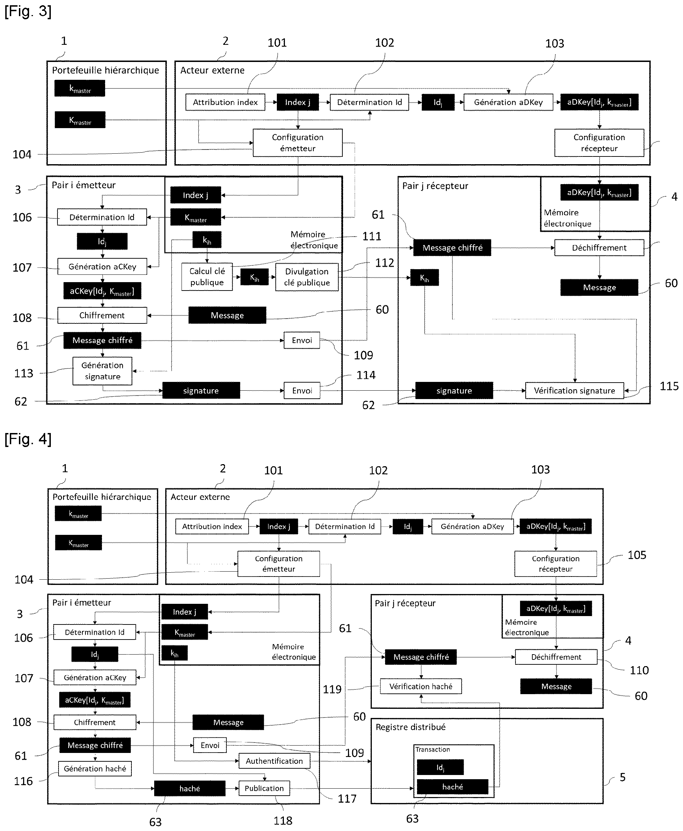

La [Fig. 3] une représentation schématique d'un exemple d'un mode de réalisation du procédé selon le premier aspect de l'invention. Les étapes du mode de réalisation décrit par la [Fig. 1] sont présentes. De manière supplémentaire, dans ce mode de réalisation, le pair émetteur 3 dispose également dans sa mémoire électronique d'une clé privée $k_{ih}$. Afin de prouver l'authenticité du message 60 envoyé au pair récepteur 4, le pair émetteur 3 calcul 111 une clé publique $K_{ih}$ correspondant à la clé privée $k_{ih}$. Les clés $K_{ih}$ et $k_{ih}$ constituent une paire de clés asymétriques. La clé publique $K_{ih}$ permet de vérifier qu'une signature a été générée à l'aide de la clé privée $k_{ih}$. Le pair émetteur divulgue 112 ensuite sa clé publique $K_{ih}$. Le pair récepteur pourra enregistrer de manière temporaire ou permanente la clé publique $K_{ih}$ du pair émetteur. Une fois le message 60 chiffré 108 par le pair émetteur 3 à l'aide de la clé de chiffrement aCKey[$Id_j$, $K_{master}$], le pair émetteur 3 génère 113 une signature 62 du message chiffré 61 à l'aide de sa clé privée $k_{ih}$. Le pair émetteur 3 envoi 114 la signature 62 au pair récepteur 4. L'envoi de la signature 62 pourra, par exemple, être réalisée conjointement avec l'envoi 109 du message chiffré 61 en concaténant le message chiffré 61 et la signature 62 en un seul message. Le pair récepteur 4 pourra ensuite vérifier 115 la signature 62 à l'aide de la clé publique $K_{ih}$ et du message chiffré, cette vérification pourra s'effectuer selon un schéma asymétrique standard de l'art antérieur et permet de s'assurer que la signature a bien été générée à l'aide de la clé privée $k_{ih}$ et qu'elle correspond bien au message chiffré 61. De cette manière, le pair récepteur pourra s'assurer de l'authenticité du message chiffré 61.

Selon un mode de réalisation, le pair émetteur comporte un composant matériel de sécurité qui permet de générer la clé privée $k_{ih}$ et accueillera éventuellement la génération de la clé publique correspondante $K_{ih}$. L'utilisation d'un composant matériel de sécurité pour la génération d'une paire de clés asymétriques permet d'augmenter la sécurité des pairs en réduisant considérablement le risque d'usurpation de l'identité d'un pair ou la corruption d'un pair. Le composant matériel de sécurité est un par exemple, un composant TPM ,en anglais, Trusted Platform Module utilisant, le protocole TPM 1.2 ou TPM 2.

La [Fig. 4] une représentation schématique d'un exemple d'un autre mode de réalisation du procédé selon le premier aspect de l'invention. Les étapes du procédé selon l'invention décrites sur la [Fig. 1] sont également représentées. Dans ce mode de réalisation, la mémoire électronique du pair émetteur 3 comporte également une clé privée $k_{ih}$. Le pair émetteur 3 et le pair récepteur sont membres d'un réseau de pairs, et partagent un registre distribué 5. Le registre distribué 5 pourra éventuellement être décentralisé et/ou répliqué par chaque pair du réseau de pairs. Des opérations ou des publications sont enregistrées dans un certain ordre dans le registre distribué 5 et ne peuvent plus être modifiées une fois enregistrées. Le registre distribué 5 peut être réalisé à l'aide d'une technologie comme par exemple une chaine de blocs ou une base de données décentralisée ou un « Directed Acyclic Graph ».

Le pair émetteur 4 s'authentifie 117 auprès du registre distribué 5 en utilisant sa clé privée $k_{ih}$. Il génère 116 un haché 63 du message chiffré 61 selon par exemple un schéma de hachage HMAC. Le pair émetteur 4 publie 118 ensuite une transaction dans le registre distribué 5, la transaction comportant le haché 63 et l'identifiant $Id_j$ du pair récepteur 4. Lors de la réception du message chiffré 61 le pair récepteur pourra vérifier 119 que le haché 63 correspond au message chiffré 61. L'authentification 117 du pair émetteur auprès du registre distribué 5 étant nécessaire à la publication 118, le pair récepteur pourra s'assurer de l'authenticité du message chiffré 61 en vérifiant la correspondance entre le haché 63 et le message chiffré 61. L'utilisation du registre distribué 5 permet de s'affranchir de l'étape de calcul et de publication de la clé publique $K_{ih}$ tout en maintenant la possibilité de vérifier l'authenticité des messages.

Selon un mode de réalisation, le registre distribué 5 est un registre, aussi appelé ledger, d'une chaine de bloc comme par exemple une chaine Ethereum. La chaine de bloc comporte un contrat intelligent qui transmet le haché 63 du message chiffré 61 par une notification au pair récepteur déclencher par la publication 118 dans le registre distribué 5.

Le contrat intelligent pourra par exemple prendre la forme suivante :

```
// SPDX-License-Identifier: UNLICENSED
pragma solidity ^0.8.0;


contract registration {
```

```
        address receiver;    // identifiant du pair récepteur
        address owner;       // identifiant de l'acteur externe
        uint256 hash;


        mapping (address => hash) public attestation;
        event Attest(address _receiver, uint256 _hash);


        constructor() {
            msg.sender = owner;
        }


        function attest(address _receiver, uint256 _hash) public {
            require(status[msg.sender] == LEGITIMATE);
            attestation[_receiver] = _hash;
            emit Attest(_receiver, _hash);
        }
```

Le pair émetteur construit une transaction vers la fonction attest du contrat intelligent qui inclut le haché du message préalablement chiffré. Puis, il émet d'une part le message chiffré vers le pair récepteur via le canal de communication de pair à pair, et d'autre part la transaction vers le registre de la chaine de bloc où le contrat intelligent a été préalablement déployé.

Le pair récepteur est notifié par le contrat intelligent qu'un message lui a été envoyé. La notification inclut le haché 63 de ce message chiffré 61. A la réception du message, il peut vérifier que le haché correspond, avant d'effectuer le déchiffrement 110.

S'il le souhaite, le pair récepteur peut également consulter la chaine de bloc pour connaitre l'adresse de compte, en général l'identifiant, du pair émetteur 4. L'usage d'une chaine de bloc garantit par construction que la signature numérique de la transaction est valide et que la clé utilisée correspond à l'identifiant du compte émetteur.

Selon un mode de réalisation non représenté, l'acteur externe 2 configure également le pair émetteur 3 en enregistrant dans la mémoire électronique du pair émetteur 3 la clé privée $k_{ih}$. La clé privée $k_{ih}$ pourra être une clé privée enfant étendue renforcée générée à partir de la clé privée maitre $k_{master}$ en utilisant un indice ih égale à la somme d'un indice entier i et de $2^{31}$. La génération de la clé privée enfant étendue renforcée pourra être réalisée selon le schéma de génération représenté sur la [Fig. 2]. Ce schéma de génération déterministe, normalisé par le « Bitcoin Improvement Proposal BIP32 », avec l'utilisation d'un indice supérieur à $2^{31}$ permet d'empêcher un tier de déduire la clé privée maitre $k_{master}$ à partir de la clé publique maitre $K_{master}$ et de la clé privé $k_{ih}$. La sécurité des communications entre les pairs en est donc renforcée de manière supplémentaire.

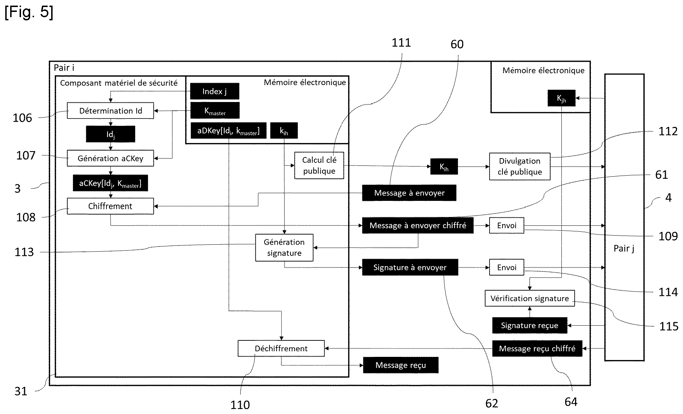

La [Fig. 5] est une représentation schématique d'un exemple du dispositif pair selon le deuxième aspect de l'invention. Le dispositif pair pourra mettre en oeuvre le procédé selon le premier aspect de l'invention en tant que pair récepteur 4 et en tant que pair émetteur 3. Le dispositif pair comporte une unité de traitement, non représentée, configurée pour, en exécutant des instructions contenues dans une mémoire électronique réaliser plusieurs étapes du procédé selon le premier aspect de l'invention.

Le dispositif pair d'indice i a été préalablement configuré pour comporter dans sa mémoire électronique un indice j d'un autre dispositif pair, une clé publique maître $K_{master}$ et une clé IBE de déchiffrement aDKey[Idi, $k_{master}$]. Le dispositif pair d'indice i détermine 106 de manière déterministe l'identifiant $Id_j$ du dispositif pair d'indice j à partir de l'indice j et de la clé publique maître $K_{master}$. Ensuite le dispositif pair d'indice i calcul 107 une clé IBE de chiffrement aCKey[$Id_j$, $K_{master}$] selon un schéma de la cryptographie basée sur l'identité en utilisant l'identifiant $Id_j$ et la clé publique maître $K_{master}$. Le dispositif pair d'indice i chiffre 108 un premier message 60, destiné au dispositif pair d'indice j, en utilisant la clé de chiffrement IBE aCKey[$Id_j$, $K_{master}$] puis envoi 109 le premier message chiffré 61 au dispositif pair d'indice j. Le dispositif pair d'indice i pourra également recevoir un deuxième message chiffré de la pair du dispositif pair d'indice j et déchiffrer 110 ce deuxième message chiffré 64 en utilisant la clé IBE de déchiffrement aDKey[Idi, $k_{master}$].

Selon un mode de réalisation, les messages échangés entre les dispositifs pairs pourront également être authentifiés lors de leur réception. Cette authentification sera réalisée avant le déchiffrement du message de cette manière, si le message n'est pas authentique, les ressources de calcul nécessaires au déchiffrement seront économisées. Le dispositif pair i pourra disposer dans sa mémoire électronique d'une clé privée $k_{ih}$, à partir de cette clé, le dispositif pair i calcul 111 une clé publique correspondante $K_{ih}$, les clés $k_{ih}$ et $K_{ih}$ constituants une paire de clés asymétriques, et divulgue 112 la clé publique $K_{ih}$. Lors de la préparation à l'envoi d'un message 60, une fois le message 60 chiffré, le dispositif pair i pourra générer 113 une signature 62 du message chiffré 61 en utilisant la clé privée $k_{ih}$ et envoyer 114 la signature 62 avec le message chiffré 61. En tant que pair récepteur, le dispositif pair i pourra recevoir et enregistrer une clé publique $K_{jh}$ divulguée par le dispositif pair j. Le dispositif pair i pourra recevoir un deuxième message chiffré 64 de la part du dispositif pair j et une signature correspondant au deuxième message chiffré 64. Avant de déchiffrer le deuxième message chiffré 64, le dispositif pair i vérifie 115 la signature reçue en utilisant la clé publique $K_{jn}$ du dispositif pair j. La vérification de cette signature permet de s'assurer qu'elle a bien été générée à l'aide d'une clé privée $k_{jh}$ correspondant à la clé publique $K_{jh}$ et qu'elle a bien été générée à partir du deuxième message chiffré 64. De manière supplémentaire, la vérification 115 de la signature pourra également permettre de s'assurer de l'intégrité du message chiffré 64. On entend par intégrité du message que ce dernier n'a pas été modifié entre la génération de la signature correspondante et la vérification de la signature correspondante.

Le dispositif pair pourra également comporter un composant matériel de sécurité 31, le composant matériel de sécurité 31 est configuré pour réaliser une partie des étapes réalisées par le dispositif pair. Le composant matériel de sécurité pourra également servir à la conservation en mémoire d'éléments cryptographiques tels que les indices des autres dispositifs pairs associés au dispositif pair i, la clé publique maître $K_{master}$, la clé de déchiffrement aDKey[$Id_i$, $k_{master}$] et la clé privée $k_{ih}$. Le composant matériel de sécurité est configuré pour déterminer 106 l'identifiant $Id_j$ du dispositif pair d'indice j, pour calculer 107 la clé IBE de chiffrement aDKey[$Id_j$, $K_{master}$], pour chiffrer 108 un message destiné au pair j et pour déchiffrer 110 un message chiffré reçu. Le composant matériel de sécurité pourra également être configuré pour calculer 111 la clé publique $K_{ih}$ et générer 113 la signature du message chiffré.

Le composant matériel de sécurité permettra de sécuriser de manière supplémentaire les communications du dispositif pair en ajoutant une barrière supplémentaire empêchant des tiers d'observer des étapes et des éléments cryptographiques nécessaire à la sécurisation des communications.

Selon un mode de réalisation non représenté, le dispositif pair i pourra également mettre en oeuvre le mode de réalisation du procédé selon l'invention impliquant l'utilisation d'un registre distribué. Le dispositif pair i pourra s'authentifier 117 auprès du registre distribué et publier 118 des transactions visant à permettre la vérification de l'authenticité et de l'intégrité des messages chiffrés envoyés.

**Revendications**

1. Procédé de communication sécurisé entre un pair émetteur (3) et un pair récepteur (4), impliquant un acteur externe (2) disposant d'un portefeuille hiérarchique déterministe (1), le portefeuille hiérarchique déterministe (1) comporte une paire de clés maîtres asymétriques, constituée par une clé privée maître $k_{master}$ et une clé publique maître $K_{master}$, le pair émetteur (3) et le pair récepteur (4) comportent une mémoire électronique et une unité de traitement, le procédé de communication comporte les étapes suivantes :

   - l'acteur externe (2) attribue (101) un indice j au pair récepteur (4) dans le portefeuille hiérarchique déterministe (1),
   - l'acteur externe (2) détermine (102) un identifiant $Id_j$ du pair récepteur (4) de manière déterministe à partir de l'indice j du pair récepteur (4) et de la clé publique maitre $K_{master}$,
   - l'acteur externe (2) génère (103) une clé IBE de déchiffrement aDKey[$Id_j$, $k_{master}$] à partir de l'identifiant du pair récepteur $Id_j$ et de la clé privée maître $k_{master}$,
   - l'acteur externe (2) configure (104) le pair récepteur (4) en enregistrant dans la mémoire électronique du pair récepteur la clé IBE de déchiffrement aDKey[$Id_j$, $k_{master}$],
   - l'acteur externe (2) configure (105) le pair émetteur (3) en enregistrant dans la mémoire électronique du pair émetteur l'indice j du pair récepteur et la clé publique maitre $K_{master}$,
   - le pair émetteur (3) détermine (106) de manière déterministe l'identifiant $Id_j$ du pair récepteur à partir de l'indice j du pair récepteur et de la clé publique maitre $K_{master}$,
   - le pair émetteur (3) calcule (107) une clé IBE de chiffrement aCKey[$Id_j$, $K_{master}$] à partir de l'identifiant du pair récepteur $Id_j$ et de la clé publique maitre $K_{master}$,
   - le pair émetteur (3) chiffre (108) un message (60) en utilisant la clé IBE de chiffrement aCKey[$Id_j$, $K_{master}$],
   - le pair émetteur (3) envoi (109) le message chiffré (61) au pair récepteur (4),
   - le pair récepteur (4) déchiffre (110) le message chiffré (61) en utilisant la clé IBE de déchiffrement aDKey[$Id_j$,

$k_{master}$].

**2.** Procédé selon la revendication 1, dans lequel les étapes de détermination (102, 106) de manière déterministe de l'identifiant $Id_j$ sont réalisées en utilisant une fonction de dérivation utilisant une fonction de hachage HMAC-SHA512.

**3.** Procédé, selon l'une des revendications 1 à 2, comportant les étapes supplémentaires suivantes :

- le pair émetteur (3) calcul (111) une clé publique $K_{ih}$ à partir d'une clé privée $k_{ih}$,
- le pair émetteur (3) divulgue (112) au pair récepteur (4) la clé publique $K_{ih}$,
- le pair émetteur (3) génère (113) une signature (62) du message en utilisant le message chiffré (61) et la clé privée $k_{ih}$,
- le pair émetteur (3) envoi (114) la signature (62) du message au pair récepteur (4),
- le pair récepteur (4) vérifie (115) la signature (62) du message en utilisant la clé publique $K_{ih}$ et le message chiffré (51).

**4.** Procédé selon la revendication 3, dans lequel le pair émetteur (3) comporte un composant matériel de sécurité (31) et dans lequel la clé privée $k_{ih}$ est générée au sein du composant matériel de sécurité (31).

**5.** Procédé selon l'une des revendications 1 à 2, dans lequel, le pair émetteur (3) et le pair récepteur (4) sont des pairs d'un réseau de pairs partageant un registre distribué (5) et dans lequel les étapes supplémentaires suivantes sont réalisées :

- le pair émetteur (3) génère (116) un haché (63) du message chiffré (61),
- le pair émetteur (3) s'authentifie (117) auprès du registre distribué (5) en utilisant une clé privée $k_{ih}$,
- le pair émetteur (3) publie (118) dans le registre distribué (5) une transaction comportant, l'identifiant du pair récepteur et le haché (63) du message chiffré (61),
- le pair récepteur (4) vérifie (119) que le haché (63) du message chiffré publié dans le registre distribué (5) correspond au message chiffré (61) reçu.

**6.** Procédé selon la revendication 5, dans lequel le registre distribué (5) est un registre distribué de chaine de bloc et dans lequel la chaine de bloc comprend un contrat intelligent émettant une notification vers le pair récepteur (4), la notification comprenant le haché (63) du message chiffré.

**7.** Procédé selon l'une des revendications 3, 5 ou 6, dans lequel l'acteur externe (2) génère la clé privée $k_{ih}$ et dans lequel l'acteur externe (2) configure le pair émetteur en enregistrant dans la mémoire électronique du pair émetteur la clé privée $k_{ih}$.

**8.** Procédé selon la revendication 7, dans lequel la clé privée $k_{ih}$ est une clé privée enfant étendue renforcée générée à partir de la clé privée maitre $k_{master}$ en utilisant un indice ih égale à la somme d'un indice entier i et de $2^{31}$.

**9.** Dispositif pair (3, 4) comportant une mémoire électronique et une unité de traitement, l'unité de traitement est configurée pour, en exécutant des instructions contenues dans la mémoire électronique réaliser les étapes suivantes :

- déterminer (106) de manière déterministe un identifiant $Id_j$ d'un pair récepteur (3, 4) à partir d'un indice j du pair récepteur (3, 4) et d'une clé publique maitre $K_{master}$,
- calculer (107) une clé IBE de chiffrement aCKey[$Id_j$,$K_{master}$] à partir de l'identifiant du pair récepteur $Id_j$ et de la clé publique maitre $K_{master}$,
- chiffrer (108) un premier message (60) en utilisant la clé IBE de chiffrement aCKey[$Id_j$, $K_{master}$],
- envoyer (109) le premier message chiffré (61) au pair récepteur (3, 4),
- déchiffrer (110) un deuxième message chiffré (64) en utilisant une clé IBE de déchiffrement aDKey[Idi, $k_{master}$].

**10.** Dispositif selon la revendication 9, comportant également un composant matériel de sécurité (31), et dans lequel le composant matériel de sécurité (31) est configuré pour réaliser les étapes suivantes :

- déterminer (106) de manière déterministe un identifiant $Id_j$ d'un pair récepteur (3, 4) à partir d'un indice j du pair récepteur (3, 4) et d'une clé publique maitre $K_{master}$,
- calculer (107) une clé IBE de chiffrement aCKey[$Id_j$,$K_{master}$] à partir de l'identifiant du pair récepteur $Id_j$ et de la clé publique maitre $K_{master}$,

- déchiffrer (110) un message chiffré (64) en utilisant une clé IBE de déchiffrement aDKey[Idi, $k_{master}$].

[Fig. 1]

[Fig. 2]

[Fig. 3]

[Fig. 4]

[Fig. 5]

Europäisches Patentamt
European Patent Office
Office européen des brevets

# RAPPORT DE RECHERCHE EUROPEENNE

Numéro de la demande

EP 25 16 7418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ADRIANO DI LUZIO ET AL: "Arcula: A Secure Hierarchical Deterministic Wallet for Multi-asset Blockchains", ARXIV.ORG, CORNELL UNIVERSITY LIBRARY, 201 OLIN LIBRARY CORNELL UNIVERSITY ITHACA, NY 14853, 13 juin 2019 (2019-06-13), XP081549181, * sections 2, 7.2, 6.2, 2.4; figure 1 * | 1-10 | INV. H04L9/08 H04L9/30 H04L9/00 |
| X | Wuille Peter: "Hierarchical Deterministic Wallets", , 12 février 2017 (2017-02-12), XP055358022, Extrait de l'Internet: URL:https://github.com/bitcoin/bips/blob/ab90b5289f0356282397fa9b8aa47d2238a7b380/bip-0032.mediawiki [extrait le 2017-03-23] * sections Extended keys, Child Key Derivation (CKD) functions, Master key generation, Use cases * | 1-10 | |
| A | Dan Boneh ET AL: "Identity-Based Encryption from the Weil Pairing", SIAM Journal on Computing, 1 janvier 2003 (2003-01-01), pages 586-615, XP055370165, Philadelphia DOI: 10.1137/S0097539701398521 Extrait de l'Internet: URL:https://crypto.stanford.edu/~dabo/papers/bfibe.pdf * le document en entier * | 1-10 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 7 avril 2025 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. BONEH** ; **M. FRANKLIN**. Identity based encryption from the Weil pairing. *SIAM J. of Computing*, 2003, vol. 32 (3), 586-615